# EUROPEAN PATENT APPLICATION

(11) **EP 4 722 794 A1**
(43) Date of publication of application: **08.04.2026**
(21) Application number: 24306612.3
(22) Date of filing: 01.10.2024
(51) Int. Cl.: G02C 7/08

(54) **METHOD FOR CONTROLLING AN OPHTHALMIC LENS HAVING AN ADJUSTABLE OPTICAL POWER**

(71) Applicant: Essilor International, 94220 Charenton-Le-Pont (FR)
(72) Inventor: CANO, Jean-Paul, 31650 LAUZERVILLE (FR)
(74) Representative: Jacobacci & Partners France

(57) **Abstract**

The invention relates to an eyewear (1) comprising:
- an ophthalmic lens (20) having an adjustable optical power, the ophthalmic lens being placed in front of an eye of the user for improving the vision of the user;
- a first sensor (30) adapted to acquire a first signal representative of a temporal variation of an optical power of the eye;
- a second sensor (40) adapted to acquire, synchronously with acquiring the first signal, a second signal representative of a temporal variation of an accommodation capacity of the eye;
- a control unit (50) programmed to:
i) determine a first direction of change of the first signal at a given moment and a second direction of change of the second signal at said given moment;
ii) modify or maintain unchanged, based on the first direction of change and the second direction of change at said given moment, the adjustable optical power of the ophthalmic lens.

## Description

### TECHNICAL FIELD OF THE INVENTION

The invention relates to a method for controlling an ophthalmic lens having an adjustable optical power.

### BACKGROUND INFORMATION AND PRIOR ART

Dynamically focusable lenses, that is to say ophthalmic lenses having an adjustable optical power, allow using the same lenses for different working distances. The main issue of this technology is to correctly associate the adjustable optical power with the visual needs of the user.

Generally, the adjustable optical power is derived from an eye-object distance measurement. Indeed, measuring eye-object distance, i.e. the working distance, allows determine the accommodation need of the user. Typically, telemetry sensors (for instance based on infrared or acoustic measurements of a time of flight) are used to measure the eye-object distance and drive the adjustable optical power of the lenses.

However, it is often difficult to discriminate which object the user is looking at. Moreover, measuring the eye-object distance requires a complex and computing expensive image analysis.

Other methods propose to directly measure the optical power of the eye plus lens group (composed of one eye and one lens).

However, none of the sensors adapted to such a measurement are simple and small enough to be easily fitted into all day long wearable eyewear. Nowadays, they are only used in research. In addition, such a measurement is highly dependent of numerous factors difficult to take into account, like pupil aperture or eye length.

### SUMMARY OF THE INVENTION

Therefore, one object of the invention is to provide a method for controlling an ophthalmic lens having an adjustable optical power, the ophthalmic lens being placed in front of an eye of a user for improving a vision of the user, the method comprising the following steps:
a) acquiring a first signal representative of a temporal variation of an optical power of the eye;
b) acquiring, synchronously with acquiring the first signal, a second signal representative of a temporal variation of a retinal image of the eye;
c) determining a first direction of change of the first signal at a given moment and a second direction of change of the second signal at said given moment;
d) modifying or maintaining unchanged, based on the first direction of change and the second direction of change at said given moment, the adjustable optical power of the ophthalmic lens.

Thanks to the measurement method according to the invention, the adjustable optical power is determined without determining the eye-object distance or measuring the optical power of the eye-lens group.

In a remarkable way, the method of the invention takes advantage of the naturally occurring low frequency modulation of optical power of the eye. Indeed, the optical power of the eye, which also corresponds to the focal length of the eye, naturally fluctuates of about 0.3 to 0.5 diopter at a frequency of about 0,5 to 2 Hz.

This modulation of optical power of the eye induces a direct modulation of an accommodation capacity of the eye which is here detected by means of the retinal image, for instance through the so-called "retinal blur".

The directions of change of the two signals give an indication on the position of the focal plane of the eye with respect to the retina of the eye. This indication allows to determine the right direction for modifying the adjustable optical power of the lens (adding or subtracting power). In other words, this indication allows to determine whether the adjustable optical power should be increased or decreased.

Here, the optical power of the ophthalmic lens is equal to the inverse of the focal length of the ophthalmic lens and may be expressed in dioptres. Thus, the ophthalmic lens having an adjustable optical power means that the ophthalmic lens has an adjustable focal length which can be dynamically controlled.

When the first signal and the second signal have the same direction of change (both increasing or decreasing at the same time, which corresponds to in phase signals) the focal plane of the eye is in front of the retina, the eye is thus "front focused". In this case, the adjustable optical power is decreased (which means that a negative value of optical power is added) which moves the focal plane back towards the retina and thus improves the vision of the user.

Conversely, when the first signal and the second signal have opposite directions of change (one increasing and the other decreasing at the same time, which corresponds to out of phase signals) the focal plane of the eye is behind the retina, the eye is thus "back focused". In this case, the adjustable length power is increased (which means that a positive value of optical power is added) which also moves the focal plane forwards towards the retina and thus improves the vision of the user.

Advantageously, the method only requires measuring temporal variations (i.e. fluctuations, and more specifically oscillations) of the optical power of the eye and of the retinal image, and not absolute values of the latter. As a consequence, experimental conditions or optical features of the eye (pupil aperture, eye length), do not affect the determination of the adjustable optical power.

As an illustrative example, when the ophthalmic lens provides a reading distance to the user that is too short, the eye is back focused. Thanks to the method according to the invention, the fact that the eye is back focused is detected based on the directions of change of the two signals being opposite. Thus, the adjustable optical power is increased so the user may read more clearly.

Other advantageous and non-limiting features of the method according to the invention are:
- the retinal image is formed by the projection onto a retina of the eye of a reference light beam;
- the temporal variation of the retinal image comprises one of the followings: a temporal variation of a contrast of the retinal image, a temporal variation of a spatial extend of the retinal image, a temporal variation of a reflected wavefront of the retinal image;
- the second signal is acquired by means of one of the following devices: a wavefront analyzer, an aberoscope, an aberometer, an image capture apparatus;
- the first signal is acquired by means of one of the following techniques: optical feedback interferometry, optical coherence tomography, ultrasonic tomography, white light confocal distance measurement, time of flight measurement, ultrasound, doppler echography, reflected light distance measurement;
- the adjustable optical power of the ophthalmic lens is decreased when the first direction of change and the second direction of change at said given moment are equal, and the adjustable optical power of the ophthalmic lens is increased when the first direction of change and the second direction of change at said given moment are opposite;
- step c) consists in calculating a phase difference between the first signal and the second signal and, in step d), the adjustable optical power of the ophthalmic lens is modified based on the phase difference;
- in step d), the adjustable optical power is increased or decreased by a dioptric value which depends on a variation of amplitude of the second signal;
- steps a) to d) are iterated until a variation of amplitude of the second signal is lower than a predetermined value;
- an error, based on the first direction of change and the second direction of change at said given moment and on a variation of amplitude of the second signal, is provided as an input to a closed-loop controller programmed to set the adjustable optical power of the ophthalmic lens such as to minimize the error;
- a step of determining an offset value which is personalized to the user, and wherein the closed-loop controller is programmed such as to set the adjustable optical power of the ophthalmic lens to the offset value when the error is minimized;
- the first signal and the second signal are sinusoidal and wherein at least one period of each of them are acquired;
- the first signal and/or second signal are temporally filtered based on a Kalman filter, a fast Fourier transform, or a wavelet transform.

The invention also relates to an eyewear comprising:
- an ophthalmic lens having an adjustable optical power, the ophthalmic lens being placed in front of an eye of the user for improving the vision of the user;
- a first sensor adapted to acquire a first signal representative of a temporal variation of an optical power of the eye;
- a second sensor adapted to acquire, synchronously with acquiring the first signal, a second signal representative of a temporal variation of an accommodation capacity of the eye;
- a control unit programmed to:
   i) determine a first direction of change of the first signal at a given moment and a second direction of change of the second signal at said given moment;
   ii) modify or maintain unchanged, based on the first direction of change and the second direction of change at said given moment, the adjustable optical power of the ophthalmic lens.

Advantageously, the eyewear is a portable eyewear adapted to be entirely worn on a head of the user.

### DETAILED DESCRIPTION OF EXAMPLE(S)

The following description, enriched with joint drawings that should be taken as non-limitative examples, will help understand the invention and figure out how it can be realized.

On the appended drawings:
- figure1 is a schematic representation from above of a first embodiment of an eyewear according to the invention;
- figure 2 is a schematic cut-view of the area AA of figure 1;
- figure 3 is a block diagram representing the steps of a method for controlling the ophthalmic lenses of the eyewear of figure 1;
- figure 4 is a graphical representation of a relationship between the focal plane of the eye and the contrast of the retinal image acquired by means of the eyewear of figure 1, together with oscillations of the latter;
- figure 5 is a schematic representation from above of a second embodiment of an eyewear according to the invention;
- figure 6 is a schematic representation from above of a third embodiment of an eyewear according to the invention.

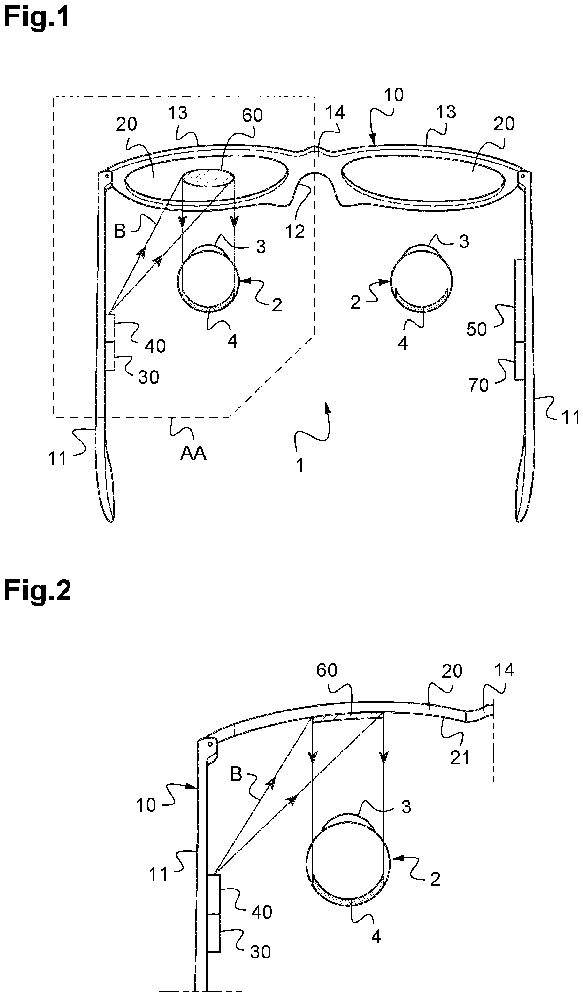

Three embodiments of an eyewear 1 are represented in figures 1, 5 and 6. In all embodiments, the eyewear 1 comprises: a frame 10 comprising two lateral branches 11 linked by a face 12; two ophthalmic lenses 20, which are here inserted in rims 13 formed in the face 13 of the frame 10; two sensors 30, 40; and a control unit 50.

As shown in figure 1, each ophthalmic lens 20 is to be placed in front an eye 2 of a wearer, also called user, of the eyewear 1 in order to improve the vision of the wearer. In other words, each ophthalmic lens 20 provides an optical correction to the wearer, who may for example suffer from myopia or hypermetropia.

Only one of the ophthalmic lenses 20 will be described hereafter and will be referred to as "the ophthalmic lens" 20.

The ophthalmic lens 20 is a dynamically focusable lens, which means that it has an adjustable optical power, i.e. an optical power which is variable. The optical power of the ophthalmic lens 20 may for instance take values between -5 D (dioptres) and +5 D. In other words, it may vary between those values, continuously or by steps, for instance of 0.1 D. The optical power of the ophthalmic lens is electronically controlled by the control unit 50.

Classically, to present an adjustable optical power, the ophthalmic lens 20 may be a liquid lens comprising an elastic membrane whose curvature radius change, and thus its optical power variation, is controlled by variations of an internal pressure. The ophthalmic lens 20 may also be based on electrowetting wherein the curvature of a two-liquid interface (the liquids having different refractive indexes) is controlled with electric fields. The ophthalmic lens 20 may also be a liquid crystal lens wherein the optical power variation is based on a change in refractive index of a liquid crystal by means of an electric field. The ophthalmic lens 20 may be mechanically controlled, the optical power variation being based on a change, by means of a mechanical stress, of the curvature of an optically clear elastomer. The change of optical power may also be based on "Alvarez" doublets.

As figures 1, 5 and 6 show it, the eyewear 1 comprises more particularly a first sensor 30 and a second sensor 40.

The first sensor 30 is adapted to acquire a first signal representative of a temporal variation (i.e. a variation over time) of an optical power of the eye 2. To this end, the first sensor 30 may be based on: interferometry, optical coherence tomography, ultrasonic tomography, white light confocal distance measurement, time of flight measurement, ultrasound, doppler echography, or reflected light distance measurement.

The second sensor 40 is adapted to acquire a second signal representative of a temporal variation of a retinal image of the eye 2. The retinal image is an image of a pattern of light projected onto the retina. To produce this retinal image, a reference light beam (referenced B in figures 1, 2, 5 and 6) is projected onto the retina 4 of the eye 2. Here, the reference light beam B travels in particular through the cornea 3 of the eye 2. The second sensor 40 may comprise: a wavefront analyzer, an aberoscope, an aberometer, or an image capture apparatus such as a CCD camera.

For both sensors 30, 40, being "adapted to" means that the sensors 30, 40 are designed and arranged on the frame 10 to acquire the first and second signals. Here, the sensors 30, 40 comprise emitting parts for stimulating the eye 2, i.e. for generating a mechanic or electromagnetic wave interacting with the eye 2, and receiving parts for detecting the result of this stimulation.

For each sensor 30, 40, the emitting and receiving parts may be distinct. By way of an example, the second sensor 40 may comprise a light source as the emitting part and an image capture apparatus as the receiving part. For each sensor 30, 40, the emitting and receiving parts may also be joint in the sense that they form a unique part. By way of an example, when the first sensor 30 is based on ultrasound, the emitting part and the receiving parts may be formed by the same piezoelectric piece of material. The two sensors 30, 40 may also share the same emitting part, for instance the same light source as exemplified below.

The control unit 50 comprises at least one processor and at least one memory, which is here non-transitory. The at least one memory, which forms a computer-readable storage medium, comprises instructions which, when executed by the at least one processor, allow controlling the adjustable optical power of the ophthalmic lens 20 based on the first and second signals generated by the sensors 30, 40. Here, the control unit 50 also commands the first and second sensors 30, 40 and thus commands the acquisition of the first and second signals.

The eyewear 1 also comprises a power source 70 such as a battery for supplying the electrically active parts of the eyewear 1. The eyewear 1 is thus a standalone optical article is the sense that it is portable and fully worn by the wearer.

A first embodiment of the eyewear 1 is described in reference to figures 1 to 4. In this first embodiment, the sensors 30, 40 are both located on the branches 11 of the frame 10. Such a configuration is advantageous as the branches are a low spatially constraint region, meaning that significant room is available on the branches 11.

As shown in figures 1 and 2, the sensors 30, 40 are more specifically located next to each other on the same branch 11. They are positioned on the branch 11 adjacent to the ophthalmic lens 20. They are positioned on the interior face of the branch 11, i.e. the face on the branch directed towards the wearer.

In this first embodiment, since the sensors 30, 40 are located in the branches, they are not directly oriented towards the eye 2. The eyewear 1 thus comprises a reflective element 60 arranged such that the sensors 30, 40 can measure eye-related features. In the example of figures 1 of 2, the reflective element 60 thus reflects light from the sensors 30, 40 to the eye 2 and vice-versa.

As shown in figure 2, the reflective element 60 is here located on a rear optical surface 21 (facing the eye) of the ophthalmic lens 20. Preferentially, the reflective element 60 is transparent in the visible spectrum not to impair the vision of the wearer. The reflective element 60 is for instance made of an off-axis mirror such as a holographic mirror or a metasurface.

The sensors 30, 40 may be based on anyone of the above-mentioned techniques. However, in the example illustrated in figures 1 and 2, both sensors 30, 40 are preferentially optical sensors working in the infrared spectrum. They more specifically work in the near-infrared region, i.e. with wavelengths ranging from about 0,78 µm to about 2,5 µm (working in the near-infrared region presents low risks for the eye 2). Therefore, advantageously, the sensors 30, 40 can share the same light source, for instance an infrared laser diode. In other words, the emitting part is common for the two sensors 30, 40.

The first sensor 30 is an accommodation microfluctuation sensor able to measure variations of the internal diopter of the eye.

In this example, the first sensor 30 is based on interferometry. The laser beam emitted by the laser diode is transmitted to the eye 2, after reflection on the eye 2 is transmitted back to the first sensor 30. The reflected light interferes with the emitted light, and theses interferences are representative of the optical power of the eye 2.

The second sensor 40 is adapted to detect a temporal variation of the retinal image generated by the reference light beam B, whose wavelengths are also in the near-infrared spectrum. The second sensor 40 comprises a camera to acquire this retinal image. The camera is directed towards the reflective element 60 to collect light coming from the retina.

Here, the grid of light pattern is shaped by the reflective element 60 which is a holographic mirror.

In this example, the second sensor 40 is adapted to detect a temporal variation of a contrast of the retinal image. Here, the reference light beam B forms a light pattern presenting the shape of a grid. Other light patterns such as parallel lines are suitable. This light pattern illuminates the retina 4 of the eye 2. The contrast of the retinal image (also called "retinal blur") is for instance defined according to the following formula: (Max-Min)/(Max+Min), wherein Max is the maximum intensity of the retinal image and Min is the minimum intensity of the retinal image.

As a variation, the light pattern of the reference beam may be shaped by a spatial light modulator, which is for instance arranged on the branch next the laser diode. In this case, the reflective element may be a dielectric mirror, for instance a narrow band notch mirror tuned for near-infrared wavelengths, or an off-axis mirror such as a holographic mirror or a metasurface.

The eyewear 1 is configured to control the adjustable optical power of the ophthalmic lens 20 in order to suit the wearer's needs. The method for controlling the adjustable optical power of the ophthalmic lens 20 comprises the following main steps:
a) acquiring the first signal representative of a temporal variation of the optical power of the eye 2;
b) acquiring, synchronously with acquiring the first signal, the second signal representative of a temporal variation of the retinal image;
c) calculating a phase difference between the first signal and the second signal;
d) modifying or maintaining unchanged, based on said phase difference, the adjustable optical power of the ophthalmic lens 20.

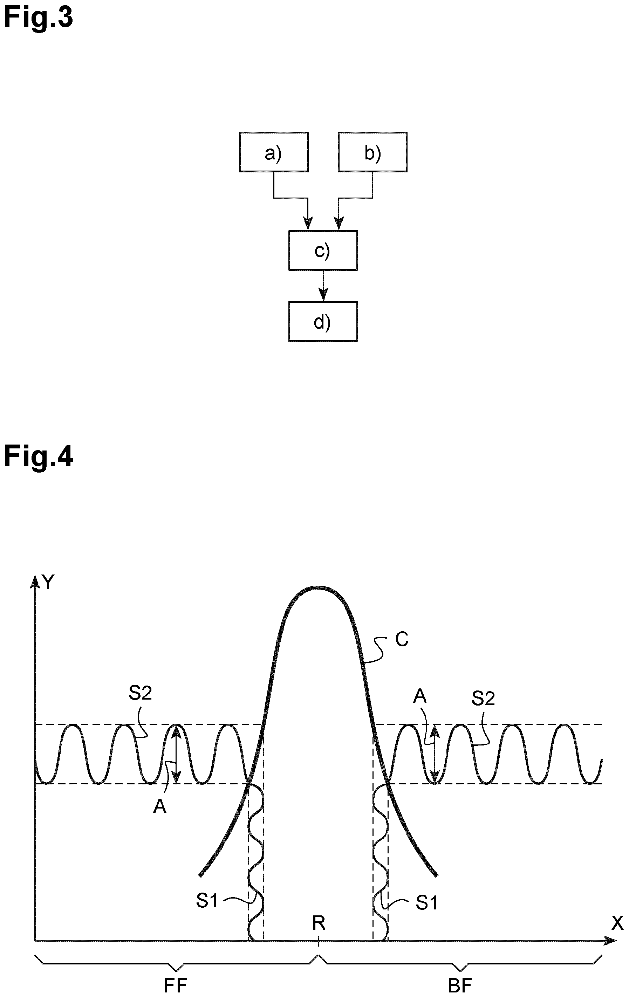

As shown in figure 3, the method starts with steps a) and b) wherein the first signal et the second signals are acquired. Steps a) and b) are performed in parallel and more particularly in a synchronous manner. In steps a) and b), the control unit 50 processes the outputs provided by the sensors 30, 40 to generate the signals.

In step a), the control unit 50 commands the acquisition, by means of the first sensor 30, of the first signal. Here, the control unit 50 receives the diode terminal current acquired by the first sensor 30 to generate the first signal. The first signal is then stored in the at least one memory of the control unit 50 together with a time indicator such as the current time or an elapsed time. The first signal is thus representative of the evolution of the optical power of the eye 2 over time. Here, the first signal is constituted of values of the optical power of the eye 2, each value being associated with a value of the time indicator. The first signal is for instance sampled at a frequency comprises between 1 Hz et 100 Hz. This means that the values of the optical power of the eye 2 are acquired at a frequency comprised between 1 Hz et 100 Hz.

In step b), the control unit 50 commands the acquisition, by means of the first second 40, of the second signal. Here, the control unit 50 receives the image acquired by the camera of the second sensor 40 and computed its contrast to generate the second signal. The second signal is then also stored in the at least one memory of the control unit 50 together with the time indicator. The second signal is thus representative of the evolution of the contrast of the retinal image over time. Here, the second signal is constituted of values of the contrast of the retinal image, each value being associated with a value of the time indicator. The second signal is for instance sampled at a frequency comprises between 1 Hz et 100 Hz. This means that the values of the contrast of the retinal image are acquired at a frequency comprised between 1 Hz et 100 Hz.

The first signal and the second signal are globally sinusoidal since the optical power of the eye 2 undergoes natural sinusoidal fluctuations, and thus undergoes oscillations (about 0.3 to 0.5 diopter at a frequency of about 0,5 to 2 Hz), and since the contrast of the retinal image is proportional to the optical power of the eye 2. Each of the first signal and the second signal may be filtered in order to extract its main sinusoidal component for the data-processing steps described below.

Example of the first and second signals are illustrated in figure 4. Figure 4 illustrates two configurations of the eye 2. In a first configuration, referenced FF, the eye 2 is front focused, which means that the focal plane of the eye 2 is in front of the retina 4 (whose position is referenced R in figure 4). In a second configuration, referenced BF, the eye 2 is back focused, which means that the focal plane of the eye 2 is behind the retina 4. The curve C is representative of a relationship between the position of the focal plane (X axis) and the contrast of the retinal image (Y axis). The position of the retina 4 is referenced R on the X axis. In figure 4, the first signal is graphically represented by temporal oscillations S1 of the focal plane position (which occurs naturally as explained above) since the optical power of the eye is inversely proportional to the focal length of the eye. The oscillations S1 of the focal plane position induces temporal oscillations S2 of the contrast of the retinal image, that is to say oscillations of the second signal.

The method then continues with step c) which more specifically comprises determining a phase difference between the first signal and the second signal. Preferentially, the control unit 50 uses several periods of the first and second signals to compute the phase difference.

Conventionally, the control unit 50 may implement signal processing tools for determining the amplitude and the phase of the signals such as digital signal processing for removing noise, temporal filtering like Kalman filter, Fast Fourier transform or wavelet transform.

Step c) then comprises determining whether the first and second signal are in phase or out of phase based on the phase difference. When the phase difference (modulo 2 Pi) is close to zero, for instance below 20 degrees, the signals are considered in phase. When the phase difference (modulo 2 Pi) is close to 180 degrees, for instance between 160 and 200 degrees, the signals are considered out of phase. The sensors 30, 40 may introduce unexpected electronic delays that may create a constant phase shift between the signals. These delays can easily be taken into account (i.e. removed) with a calibration phase.

The two signals being in phase means that at a given moment, i.e. for a given value of the temporal indicator, the two signals have the same direction of change: both increasing or both decreasing. Conversely, the two signals being out of phase means that at a given moment, the two signals have opposition directions of change: one increasing and the other decreasing. Here, a "direction of change" can either be an increase or a decrease and does not take into account the amplitude of the change. Said given moment is simply a reference time at which step e3) is implemented.

As figure 4 shows it, the two signals being in phase means that the eye 2 is front focused. The eye 2 thus needs a decrease in optical power to move its focal plane towards the retina 4. Conversely, two signals being out of phase means that the eye 2 is back focused. The eye 2 thus needs an increase in optical power to move its focal plane towards the retina 4.

The variation of optical power that the eye 2 needs is provided by the ophthalmic lens 20, by means of a variation of its adjustable optical power, during step d) of the method.

In step d), when the signals are in phase, the control unit 50 decreases the optical power of the ophthalmic lens 20. When the signals are out of phase, the control unit 50 increases the optical power of the ophthalmic lens 20.

This change in the optical power of the ophthalmic lens 20 may comprise increasing or decreasing the optical power of the ophthalmic lens 20 by a fixed predetermined value, for instance comprised between 0.05 D and 0.5 D. By way of an example, when a current value of the optical power of the ophthalmic lens 20 is -3 D, increasing the optical power may consist in setting the optical power to -2.8 D and decreasing the optical power may consist in setting the optical power to -3.2 D (in this case said fixed prerendered value is 0,2 D). By iterating steps a) to d), for instance every 0.1 s to 1 s, the optical power of the ophthalmic lens 20 thus reaches and oscillates around an optimum value which leads the focal plane of the eye 2 being positioned on the retina 4 (which correspond the maximum of the curve C in figure 4).

Advantageously, the adjustable optical power is increased or decreased by a dioptric value which depends on a variation of amplitude of the second signal. The dioptric value simply refers to a value that can be expressed in diopters. Here, the control unit 50 may maintain unchanged the optical power of the ophthalmic lens 20 when the variation of amplitude of the second signal is below a predetermined threshold value.

Indeed, in a general manner (see figure 4), the further from the retina 4 the focal plane is, the biggest the amplitude of the variations (referenced A in figure 4) of the second signal is. In other words, when the amplitude of the variations of the second signal is high, the focal plane of the eye 2 is far from the retina 4 and the eye 2 needs a significant change in optical power. Conversely, when the amplitude of the variations of the second signal is low, the eye 2 is relatively well focused and needs only a small change in optical power.

The control unit 50 is for instance programmed to determine the dioptric value as proportional to the amplitude of the second signal. In this way, the optimum value of the optical power of the ophthalmic lens 20 is rapidly reached. A proportionality coefficient between the dioptric value and the amplitude of the second signal may be determined by an experimental calibration phase. This proportional coefficient may depend on the sensors and/or on the wearer, for instance through pupil size.

Here, the control unit 50 comprises a closed-loop controller based on the method above-described.

The control unit 50 is programmed to compute of an error based on the phase difference and on the dioptric value determined in step d). The phase difference gives the sign of the error. The error is positive when the signals are in phase and negative when the signals out of phase. The dioptric value gives the absolute value of the error.

Steps a) to d) are then iterated, and, at each iteration, the error is provided as an input to the closed-loop controller which is programmed to set the adjustable optical power of the ophthalmic lens such as to minimize the absolute value of the error, that is to say to brings it close to zero.

Advantageously, the closed-loop controller takes into account an offset value which is personalized to the wearer. The offset value is a final correction that the wearer needs when the optical power of the ophthalmic lens 20 has stabilized around the optimum value. The offset value is thus representative of a subjective needs of wearer, which might for example prefer an addition +0.5 D with respect to the optical power provided by the eyewear 1. The offset value is for instance determined through a series of trials wherein the wearer uses the eyewear 1. The offset value may be determined by the user itself. The closed-loop control system is thus programmed such as to set the adjustable optical power of the ophthalmic lens 20 to the offset value when the error is minimized.

To this end, the closed-loop controller starts by calculating a difference between the error and the offset value. The closed-loop controller then for instance applies a proportional control which means that the variation in optical power is proportional to said difference. As a variation, the closed-loop controller may be based on a derivate or an integral of said difference or a combination of said difference, its derivate and its integral.

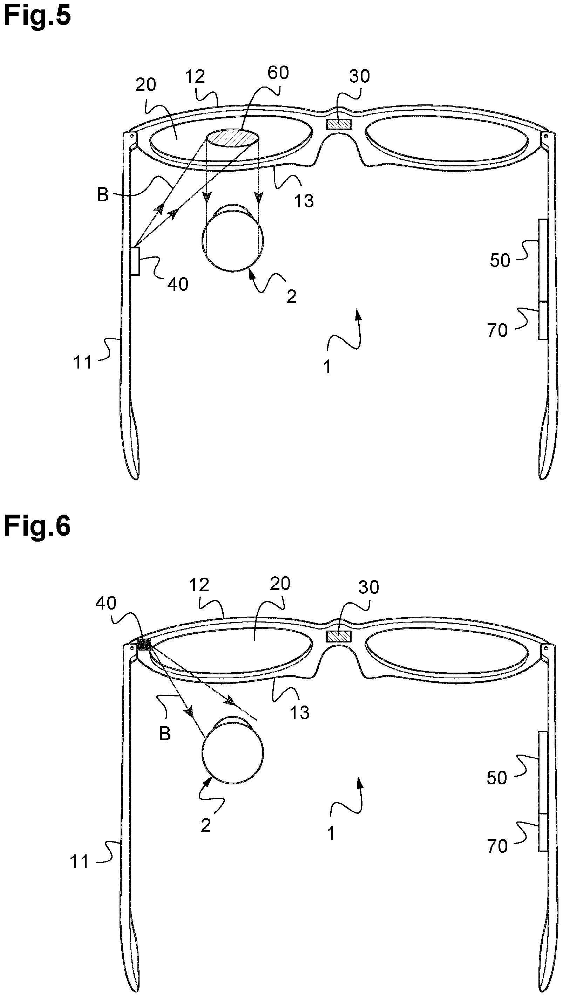

A second embodiment of the eyewear 1 is represented on figure 5. This second embodiment only differs from the first embodiment in that, one of the two sensors 30, 40 is located on the face 12 of the frame 10.

Said sensor 30, 40 may thus be directly directed towards the eye 2, as illustrated in figure 5. This position of the sensor 30, 40 is well adapted for non-optical sensors such as ultrasound sensors. In the example illustrated in figure 5, the first sensor 30 is located on the face 12 of the frame 10 and more particularly on the bridge 14 between the two rims 13.

The method for controlling the adjustable optical power of the ophthalmic lens 20 is identical to the one of the first embodiment.

A third embodiment of the eyewear 1 is represented on figure 6. This third embodiment differs from the first embodiment in that the two sensors 30, 40 are located on the face 12 of the frame 10 and in that the eyewear 1 does not comprises the reflective element.

Indeed, the sensors 30, 40 located on the face 12 of the frame 10 may be directly directed towards the eye 2, as illustrated in figure 6, which remove the need for any reflective element.

The method for controlling the adjustable optical power of the ophthalmic lens 20 is identical to the one of the first embodiment.

The invention is not limited to the embodiments described and illustrated, and any variant confirming to the appended claims could be provided.

By way of an example, the control unit may not compute the phase difference. Indeed, it is sufficient, for determining whether the optical power of the ophthalmic lens should be increased or decreased, to compare the directions of change of the two signals. They are compared at a same reference time (said given moment). If they are identical, the optical power is decreased. If they are opposite, the optical power is increased. Each direction of change may be determined based on the sign of the derivate of the signal. In other words, the direction of change corresponds to the orientation of the slope of the signal. Not computing the phase difference may be useful when less than a period of the signals is acquired or when the signals do not present sinusoidal variations.

The second signal may be representative of a temporal variation of a spatial extend of the retinal image. In this case, the reference light beam is for instance a collimated laser beam and the spatial extend of the retinal image is defined as the full width at half maximum of the reference beam projected onto the retina. The second signal may also be representative of a temporal variation of a reflected wavefront of the retinal image. In this case, the second sensor comprises a wavefront analyzer such as a Shack-Hartmann sensor.

The second sensor may comprise a miniaturized Tcherning's aberoscope wherein a collimated light pattern is projected onto the retina and back imaged by a camera.

The two ophthalmic lenses may be controlled in parallel by means of the two sensors only. In this case, the same variations in optical power are applied to the two ophthalmic lenses. Of course, the sensors might be duplicated such that the features of each eye are measured, and each ophthalmic lens is controlled independently.

The eyewear may comprise more than one reflective element. The eyewear may for instance comprise one reflective element per sensor. The eyewear may also comprise two reflective elements for one sensor, one reflective element for reflecting the light from the sensor towards the eye and another for reflecting the light from the eye towards the sensor. The one or more reflective elements may also be positioned on the frame, for instance on the rims.

## Claims

1. Method for controlling an ophthalmic lens (20) having an adjustable optical power, the ophthalmic lens (20) being placed in front of an eye (2) of a user for improving a vision of the user, the method comprising the following steps:
a) acquiring a first signal representative of a temporal variation of an optical power of the eye (2);
b) acquiring, synchronously with acquiring the first signal, a second signal representative of a temporal variation of a retinal image of the eye (2);
c) determining a first direction of change of the first signal at a given moment and a second direction of change of the second signal at said given moment;
d) modifying or maintaining unchanged, based on the first direction of change and the second direction of change at said given moment, the adjustable optical power of the ophthalmic lens (20).

2. Method according to claim 1, wherein the retinal image is formed by the projection onto a retina of the eye (2) of a reference light beam.

3. Method according to claim 1 or 2, wherein the temporal variation of the retinal image comprises one of the followings: a temporal variation of a contrast of the retinal image, a temporal variation of a spatial extend of the retinal image, a temporal variation of a reflected wavefront of the retinal image.

4. Method according to anyone of claims 1 to 3, wherein the second signal is acquired by means of one of the following devices: a wavefront analyzer, an aberoscope, an aberometer, an image capture apparatus.

5. Method according to anyone of claims 1 to 4, wherein the first signal is acquired by means of one of the following techniques: optical feedback interferometry, optical coherence tomography, ultrasonic tomography, white light confocal distance measurement, time of flight measurement, ultrasound, doppler echography, reflected light distance measurement.

6. Method according to any one of claims 1 to 5, wherein the adjustable optical power of the ophthalmic lens (20) is decreased when the first direction of change and the second direction of change at said given moment are equal, and wherein the adjustable optical power of the ophthalmic lens (20) is increased when the first direction of change and the second direction of change at said given moment are opposite.

7. Method according to any one of claims 1 to 6, wherein step c) consists in calculating a phase difference between the first signal and the second signal and wherein, in step d), the adjustable optical power of the ophthalmic lens (20) is modified based on the phase difference.

8. Method according to anyone of claims 1 to 7, wherein in step d), the adjustable optical power is increased or decreased by a dioptric value which depends on a variation of amplitude of the second signal.

9. Method according to anyone of claims 1 to 8, wherein steps a) to d) are iterated until a variation of amplitude (A) of the second signal is lower than a predetermined value.

10. Method according to any one of claims 1 to 9, wherein an error, based on the first direction of change and the second direction of change at said given moment and on a variation of amplitude (A) of the second signal, is provided as an input to a closed-loop controller programmed to set the adjustable optical power of the ophthalmic lens (20) such as to minimize the error.

11. Method according to claim 10, comprising a step of determining an offset value which is personalized to the user, and wherein the closed-loop controller is programmed such as to set the adjustable optical power of the ophthalmic lens (20) to the offset value when the error is minimized.

12. Method according to any one of claims 1 to 11, wherein the first signal and the second signal are sinusoidal and wherein at least one period of each of them are acquired.

13. Method according to any one of claims 1 to 12, wherein the first signal and/or second signal are temporally filtered based on a Kalman filter, a fast Fourier transform, or a wavelet transform.

14. Eyewear (1) comprising:
- an ophthalmic lens (20) having an adjustable optical power, the ophthalmic lens (20) being placed in front of an eye (2) of the user for improving the vision of the user;
- a first sensor (30) adapted to acquire a first signal representative of a temporal variation of an optical power of the eye (2);
- a second sensor (40) adapted to acquire, synchronously with acquiring the first signal, a second signal representative of a temporal variation of an accommodation capacity of the eye (2);
- a control unit (50) programmed to:
i) determine a first direction of change of the first signal at a given moment and a second direction of change of the second signal at said given moment;
ii) modify or maintain unchanged, based on the first direction of change and the second direction of change at said given moment, the adjustable optical power of the ophthalmic lens (20).

15. Eyewear (1) according to claim 14, wherein the eyewear (1) is a portable eyewear (1) adapted to be entirely worn on a head of the user.
